# EUROPEAN PATENT APPLICATION

(11) **EP 1 229 370 A2**
(43) Date of publication of application: **07.08.2002**
(21) Application number: 02075513.8
(22) Date of filing: 05.02.2002
(51) Int. Cl.: G02B 7/00

(54) **Adjustable support device for glass optical elements**

(30) Priority: 06.02.2001 ES 200100257
(71) Applicant: Monocrom, 08800 Vilanova I La Geltru, Barcelona (ES)
(72) Inventor: Galan Valiente, Miguel, 08800 Vilanova i la Geltrau, Barcelona (ES)
(74) Representative: Richebourg, Michel François

(57) **Abstract**

This device is comprised of an annular base plate (1), an intermediate annular body (2) mounted coaxially and with the possibility of rotation with respect to the previous one, a glass-holder platform (3) mounted on the intermediate body (2) with the possibility of lateral tilting in at least two perpendicular directions and some adjustment means to carry out the controlled tilting of the glass holder platform (3), to achieve the alignment of the optical axis (71) of the glass (7) mounted on it, with the mechanical axis (12) of the intermediate annular body (2) and of the base plate (1) permitting the rotation of the glass (7) the orientation of its optical axis remaining invariable.

## Description

### AIM OF THE INVENTION

This invention refers, as its title suggests, to a glass support device with alignment of its optical axis. This device has an annular base plate, an intermediate annular body, mounted coaxially and with possibility of rotation with respect to the above, a glass-holder platform mounted on the intermediate annular body with possibility of lateral tilting in at least two perpendicular directions, and some operating means to carry out the controlled tilting from the glass-holder platform to achieve the alignment of the optical axis of the glass mounted on the same with the mechanical axis of the intermediate body and of the base plate.

### BACKGROUND OF THE INVENTION.

The use of different devices is currently normal to mount optical glasses on laser equipment and appliances used for different applications. These glasses are waxed in laboratory and, after being cut and polished, can have different shapes (cube, cylinder, disc, etc.), it being very common for the optical axis of the glass not to coincide with its mechanical axis..

To mount the glass on the optical equipment it is designed for, some devices are normally used that include a movable piece, which the glass is mounted on.

By moving the aforementioned part with respect to another support part the optical axis of the glass can be moved in a certain direction at the expense of disaligning the mechanical axis of the part, which gives rise to an important problem, as on turning the movable part, the optical axis of the glass continuously changes direction, defining a conical surface in its rotation due to the divergence of the optical axis of the glass, with respect to the mechanical axis of the movable part.

### DESCRIPTION OF THE INVENTION

To solve the problems mentioned the support device targeted by the invention has been designed, which permits mounting a glass on said device and varying the alignment of its optical axis, so that when this glass rotates, its optical axis is kept aligned with the axis of the device.

According to the invention, this device includes a annular base plate, an intermediate annular body mounted coaxially and with the possibility of rotation with respect to the previous one, a glass-holder platform mounted on the intermediate annular body with the possibility of lateral tilting in at least two perpendicular directions, and some adjustment means to carry out the controlled tilting of the glass-holder platform until the optical axis of the glass mounted on it is aligned with the mechanical axis of the intermediate annular body and of the base plate.

The intermediate annular body has an annular thicknessing on the rear which acts upon the rear surface of the base plate and on the front, an adjustment ring that acts upon the front surface of said base plate, preventing the lateral tilting of the intermediate annular body with respect to the latter and guaranteeing the coincidence of their mechanical axes.

The intermediate annular body and the glass-holder platform have various opposing notches, provided with seatings to position a ball, which acts as a support point for the glass-holder platform during its lateral tilt with respect to the intermediate body.

The glass-holder platform is kept mounted with respect to the intermediate annular body by means of two screws mounted loosely in some longitudinal holes made in the intermediate annular body and secured by the front ends to the notches of the glass-holder platform, tending to move it towards the rear area by means of several springs mounted between the head of these screws and the rear surface of the intermediate annular body.

The operating means of the platform can be controlled by mechanical, electric, pneumatic or hydraulic means. They will preferably be comprised of two hydraulic pistons mounted on the intermediate annular body and which act directly on two points of the notches of the glass-holder platform, tending to move it towards the front area of the device.

The pistons mentioned are joined to two independent hydraulic circuits provided with means to operate them.

Each one of the hydraulic circuits has a cavity on the base plate which connects, by means of an oblique hole, to a watertight annular channel defined between the periphery of the intermediate annular body and the base plate, and an inner hole in the intermediate annular body that connects the watertight annular channel to the assembly area of the relative hydraulic piston.

The operating means of the pistons are comprised of different screws mounted on the outside annular body and which on being activated by hand are introduced more or less into the cavities of the relative hydraulic circuits provoking the pistons to advance or permitting their backward movement due to the action of the glass-holder platform.

### DESCRIPTION OF THE FIGURES.

To complement the description that is being made and in order to facilitate understanding of the characteristics of the invention, a set of drawings are enclosed with this descriptive report where, with an illustrative but not limiting nature, the following has been illustrated:

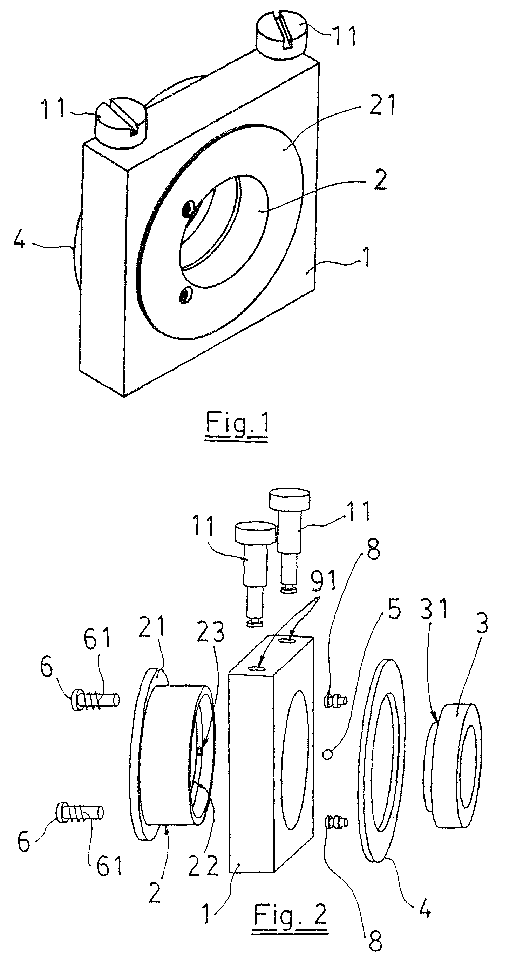

- Figure 1 shows a rear perspective view of the device targeted by the invention.
- Figure 2 shows a parts breakdown aligned in front perspective of the device of the previous figure.
- Figure 3 shows an elevational rear view of the same device.
- Figure 4 shows a ground view of the device of the invention sectioned by a horizontal plane.
- Figure 5 shows a ground view of the intermediate annular body mounted on the base plate, sectioned by a horizontal plane where the hydraulic circuit channels can be seen, defined between the intermediate body and the base plate, the oblique holes that connect these channels to the cavities of the hydraulic circuit defined in the base plate having been illustrated with a broken line.

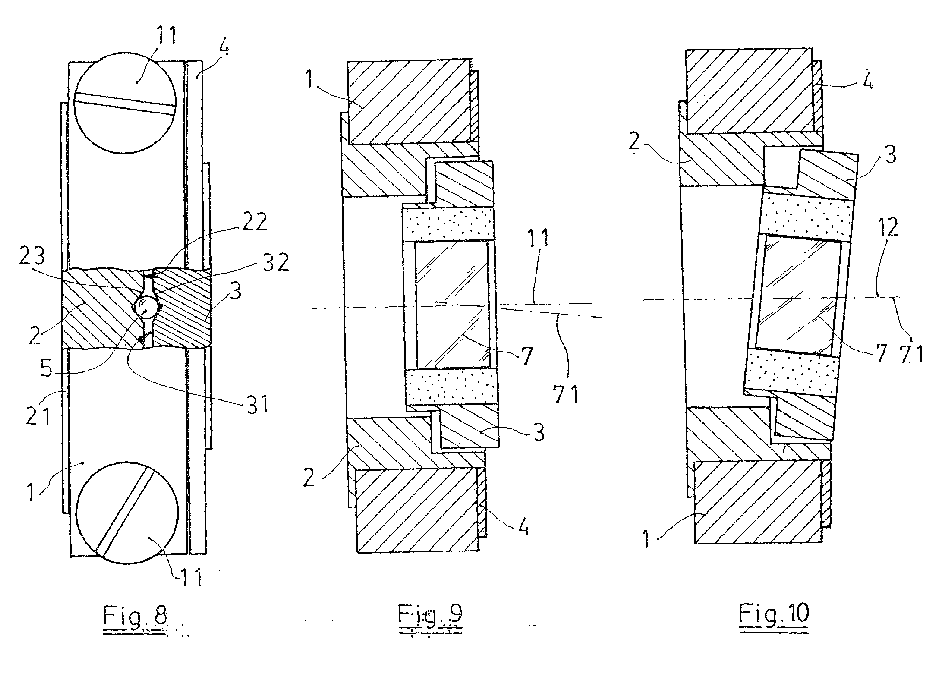

- Figures 6, 7 and 8 show different ground views of the device of the invention partially sectioned and where one of the retaining screws of the glass-holder platform with respect to the base plate, one of the hydraulic pistons that act upon the glass-holder platform and the ball that acts as support point for the glass-holder platform during the tilting, can be seen, respectively.
- Figures 9 and 10 schematically show two sections of the device, where the glass-holder platform in an initial position, can be seen, where the optical axis of the glass is out of alignment with respect to the mechanical axis of the intermediate part and of the base plate, and in a final position where this platform has tilted sideways making the optical axis of the glass coincide with the mechanical axis of the intermediate body and of the base plate.

### PREFERENTIAL EXECUTION OF THE INVENTION

As can be seen in the figures referenced, this device is comprised of a base plate (1) with annular configuration, by an intermediate body (2), also annular, mounted coaxially and with the possibility of rotation with respect to the base plate (1) and by a glass-holder platform (3) mounted with the possibility of tilting with respect to the intermediate body (2).

The intermediate body (2) has an annular thicknessing (21) on the rear, which acts against the rear surface of the base plate (1) and, on the front an adjustment ring (4) that acts against the front surface of the base plate (1).

The intermediate body (2) and the glass-holder plate (3) have different opposing notches (22 and 31) where some seatings (23 and 23) are defined for positioning a ball (5) which acts as a support point for the glass-holder platform (3) during its lateral tilting with respect to the intermediate body (2).

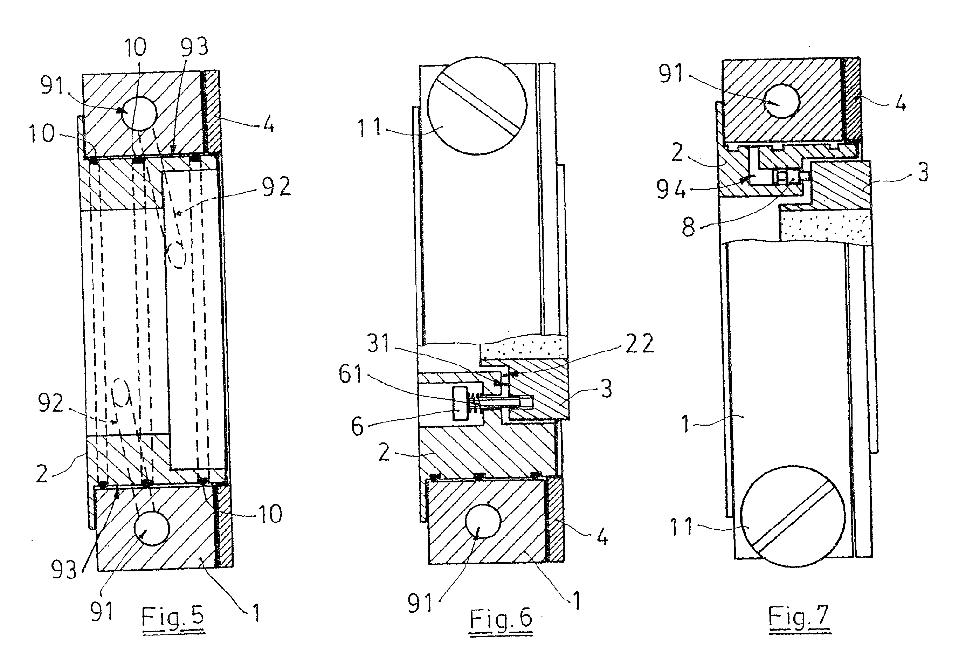

The glass-holder plate (3), holder of the optical glass (7), is joined to the intermediate annular body (2) with two screws (6) mounted loosely in some longitudinal holes made on the base plate (1) and secured at the ends to the notches (31) of the glass-holder platform (3), as shown in figure 6, tending to move it to the rear by means of different springs (61) mounted between the head of these screws (6) and the rear surface of the intermediate annular body (2).

In this execution example, the operating means of the platform (3), used to achieve its tilting with respect to the support point comprised of the ball (5) and as a result with respect to the intermediate body (2), are comprised of two hydraulic pistons (8) mounted on the intermediate annular body (2) and which act directly on two points of the notches (31) of the glass-holder platform (3), tending to move it towards the front of the device.

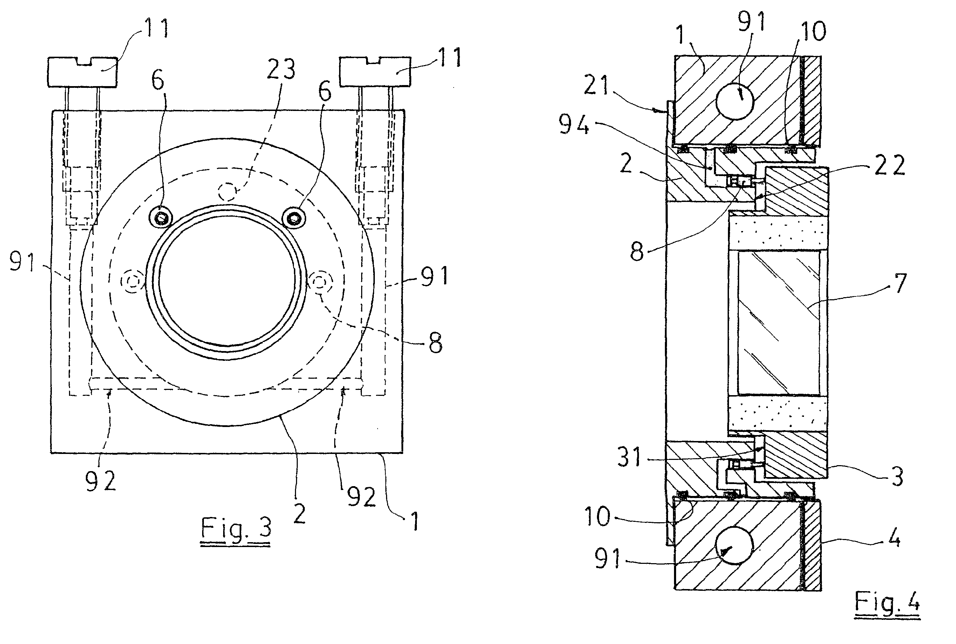

The action points of these pistons (8) on the platform (3) are out of phase angularly with respect to the support point of this platform (3) on the ball (5), as can be seen in figure 3, so that the thrust of the pistons (8) causes the tilting of the platform on two perpendicular axes.

The pistons (8) are joined to two independent hydraulic circuits equipped with operating means.

Each one of the hydraulic circuits mentioned has a cavity (91), on the base plate (1), which connects by means of an oblique hole (92) to a watertight annular channel (93) defined between the periphery of the annular body (2) and the base plate (1) and an inside hole (94), in the intermediate annular body (2), which connects the watertight annular channel (93) to the assembly area of the relative hydraulic piston (8).

The annular channels (93) are delimited by some O-rings (10) mounted between the base plate (1) and the intermediate body (2).

The operating means of the pistons (8) are comprised of different screws (11) mounted on the base plate (1). By turning the screws (11) by hand, in one direction or another, they are introduced more or less into the cavities (91) of the relative hydraulic circuits, causing the forward movement of the pistons (8) or permitting them to move backwards due to the action of the glass-holder platform (3), which tends to come closer to the intermediate body (2) due to the action of the springs (61).

When the optical axis (71) of the glass (7) mounted on the platform (3) is out of alignment with respect to the mechanical axis (12) of the base plate (1) and of the intermediate body (2) as shown in figure 9, it is sufficient to apply the screws (11) to cause the tilting of the platform (3) in order to achieve the alignment of the optical axis (71) of the glass (7), with the mechanical axis (12) of the base plate (1) of the intermediate body (2) as shown in figure (10).

After having carried out this alignment, the assembly comprised of the intermediate body (2), the glass holder platform (3) and the glass (3) can be rotated with respect to the base plate (1), maintaining the direction of the optical axis (71) with respect to the base plate (1) invariable.

Once the nature of the invention has been sufficiently described, as well as an example of preferential execution, for the appropriate purpose, it is noted that the materials, shape, size and placement of the elements described can be modified, providing this does not represent any alteration of the essential characteristics of the invention that are claimed below.

## Claims

1. Device for the glass support with alignment of its optical axis; **characterised** because it has an annular base plate (1), an intermediate annular body (2) coaxially mounted and with possibility of rotation with respect to the previous one, a glass-holder platform (3) mounted on the intermediate body (2) with possibility of lateral tilting in at least two perpendicular directions and some mechanical, electrical, pneumatic or hydraulic operation means to carry out the controlled tilting of the glass-holder platform (3), to achieve the alignment of the optical axis (71) of the glass (7) mounted on it, with the mechanical axis (12) of the intermediate annular body (2) and of the base plate (1).

2. Device, according to the previous claim, **characterised** because the intermediate annular body (2) has an annular thicknessing (21) on the rear, which acts upon the rear surface of the base plate (1) and an adjustment ring (4), on the front, which acts upon the front surface of the aforementioned base plate (1) preventing the lateral tilting of the intermediate body (2) with respect to the base plate (1).

3. Device according to the previous claims, **characterised** because the intermediate annular body (2) and the glass-holder platform (3) have different opposing notches (22, 31), equipped with seatings (23, 32) for positioning a ball (5) which acts as support point for the glass-holder platform (3) during its lateral tilting with respect to the intermediate body (2).

4. Device, according to the previous claims, **characterised** because the glass-holder platform (3) is joined to the intermediate annular body (2) with two screws (6) freely mounted on some longitudinal holes made in said body (2) and secured at the ends to the notches of the glass-holder platform (3), tending to move it towards the rear area by means of different springs (61) mounted between the head of these screws (6) and the rear surface of the intermediate annular body (2).

5. Device, according to previous claims, **characterised** because the operating means of the glass-holder platform (3) include two hydraulic pistons (8) mounted on the intermediate annular body (2) and which operate directly on two points of the notches (31) of the glass-holder platform (3) tending to moving it towards the front of the device.

6. Device, according to the previous claims, **characterised** because the hydraulic pistons (8) are joined to two independent hydraulic circuits equipped with means to operate them.

7. Device, according to the previous claims, **characterised** because each one of the hydraulic circuits has a cavity (91), on the base plate (1), which connects by means of an oblique hole (92) to a watertight annular channel (93) defined between the periphery of the intermediate annular body (2) and the base plate (1), and an inside hole (94) in the intermediate annular body (2), which connects the watertight annular channel (93) to the assembly area of the relative hydraulic piston (8).

8. Device, according to the previous claims, **characterised** because the operating means of the piston (8) are comprised of different screws (11) mounted on the base plate (1) and which are introduced more or less into the cavities (91) of the relative hydraulic circuits, causing the pistons (8) to advance or permitting them to go backwards due to the action of the glass-holder platform (3), which tends to come closer to the intermediate body (2) due to the action of the springs (61).
